# EUROPÄISCHE PATENTANMELDUNG

(11) **EP 1 167 128 A2**
(43) Veröffentlichungstag der Anmeldung: **02.01.2002**
(21) Anmeldenummer: 01115017.4
(22) Anmeldetag: 20.06.2001
(51) Int. Cl.: B60R 21/16

(54) **Luftsack**

(30) Priorität: 21.06.2000 DE 10030488
(71) Anmelder: Delphi Technologies, Inc., Troy, MI 48007 (US)
(72) Erfinder: Varcus, Johannes, 45549 Sprockhövel (DE)
(74) Vertreter: Manitz, Finsterwald & Partner GbR

(57) **Zusammenfassung**

Ein Luftsack weist im Inneren im Bereich des Luftsackmundes eine Umlenkeinrichtung (18) auf, mit der der in das Innere des Luftsackes eintretende Gasstrom seitlich umgelenkt wird.

## Beschreibung

Die vorliegende Erfindung betrifft einen Luftsack, der zur Anbindung an einen Gasgenerator mit einem Luftsackmund versehen ist, wobei im Inneren des Luftsackes im Bereich des Luftsackmundes eine Umlenkeinrichtung mit einem Diffusorgewebeteil vorgesehen ist, die einen durch den Luftsackmund in das Innere des Luftsackes eintretenden Gasstrom um mehr als 90° umlenkt.

Ein Luftsack dieser Art ist grundsätzlich bekannt und dient zum Schutz von Fahrzeuginsassen bei einem Unfall. Bei Zünden des Gasgenerators strömt Gas in das Innere des Luftsacks, so daß sich dieser entfaltet und ein Polster für den Fahrzeuginsassen bildet. Hierbei wird angestrebt, daß sich der Luftsack nicht primär in Richtung auf den Fahrzeuginsassen, sondern möglichst seitlich bzw. radial entfaltet, um ungewollte Verletzungen beim Entfalten des Luftsackes auszuschließen.

Es ist die Aufgabe der vorliegenden Erfindung, einen verbesserten Luftsack der eingangs genannten Art zu schaffen.

Die Lösung dieser Aufgabe erfolgt durch die Merkmale des Anspruchs 1 und insbesondere dadurch, daß das Diffusorgewebeteil der Umlenkeinrichtung über ein Abstandsgewebeteil mit dem den Luftsackmund umgebenden Teil des Luftsackes verbunden ist. Hierdurch wird erreicht, daß sich der Luftsack zunächst im wesentlichen seitlich bzw. radial entfaltet, so daß nachströmendes Gas die Luftsackhülle nicht übermäßig in Richtung des Fahrzeuginsassen verformt. Hierbei ist durch das erfindungsgemäß vorgesehene Abstandsgewebeteil sichergestellt, daß das erfindungsgemäß vorgesehene Diffusorgewebeteil zunächst aus dem Gehäuse des Luftsacks austreten kann und anschließend - gehalten durch das Abstandsgewebeteil - eine Umlenkung des Gasstromes um mehr als 90° bewirkt. Verglichen mit einem direkten Befestigen des Diffusorgewebeteils im Bereich des Luftsackmundes haben sich mit der erfindungsgemäßen Lösung deutlich bessere Ergebnisse erzielen lassen.

Vorteilhafte Ausführungsformen der Erfindung sind in der Beschreibung, den Figuren sowie den Unteransprüchen beschrieben.

Nach einer vorteilhaften Ausführungsform kann ein Gewebeteil, d.h. entweder das Diffusorgewebeteil oder das Abstandsgewebeteil laschenartige Stegabschnitte aufweisen. Hierdurch sind zwischen den laschenartigen Stegabschnitten Austrittsöffnungen geschaffen, durch welche der umgelenkte Gasstrom austreten kann. Beispielsweise können über den Umfang der Umlenkeinrichtung verteilt sechs laschenartige Stegabschnitte vorgesehen sein, so daß hierdurch insgesamt sechs Austrittsöffnungen für den Gasstrom geschaffen sind.

Nach einer weiteren vorteilhaften Ausführungsform können beide Gewebeteile im wesentlichen kreisförmig sein, wobei das Abstandsgewebeteil mit über dessen Umfang verteilten und an diesen angrenzenden Aussparungen mit dazwischenliegenden laschenartigen Stegabschnitten versehen ist. Bei dieser Ausführungsform sind die laschenartigen Stegabschnitte dadurch geschaffen, daß am Außenumfang des Abstandsgewebeteils Aussparungen vorgesehen sind. Bei dieser Ausführungsform haben sich in Verbindung mit einem kreisförmigen Diffusorgewebeteil gute Ergebnisse gezeigt.

Besonders vorteilhaft ist es, wenn das Abstandsgewebeteil einen geschlossen umlaufenden Stegabschnitt aufweist, der an den Luftsackmund angrenzt. Hierdurch ist sichergestellt, daß das mit dem Abstandsgewebeteil verbundene Diffusorgewebeteil beim Entfalten des Luftsacks vollständig aus dem Luftsackgehäuse austreten kann und sich dann in einer definierten Position befindet. Zu diesem Zweck sollte die Breite des Stegabschnittes mindestens der Tiefe des Luftsackgehäuses entsprechen.

Grundsätzlich kann entweder das Diffusorgewebeteil oder das Abstandsgewebeteil mit den laschenartigen Stegabschnitten versehen sein.

Nachfolgend wird die vorliegende Erfindung rein beispielhaft anhand einer vorteilhaften Ausführungsform unter Bezugnahme auf die beigefügten Zeichnungen beschrieben. Es zeigen:
- Fig. 1: eine Seitenansicht eines Luftsackes gemäß der Erfindung im entfalteten Zustand;
- Fig. 2: eine Seitenansicht der Umlenkeinrichtung im entfalteten Zustand;
- Fig. 3: eine perspektivische Vorderansicht des Luftsackes von Fig. 1; und
- Fig. 4: eine perspektivische Rückansicht der Umlenkeinrichtung von Fig. 2.

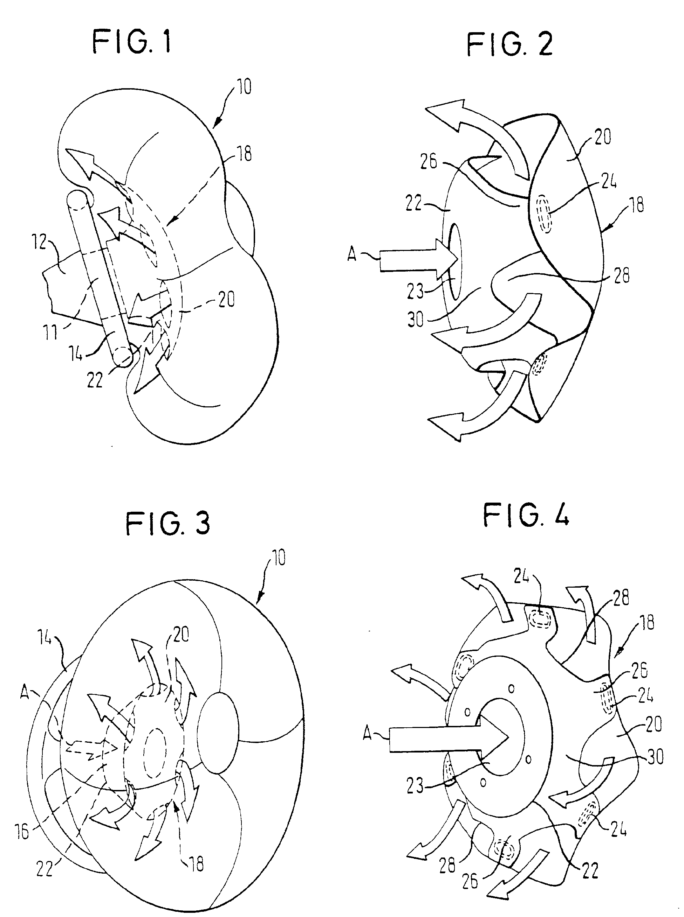

Fig. 1 zeigt einen Luftsack 10, der in einem Lenkrad 14 angeordnet ist, das an einer Lenksäule 12 befestigt ist. Der Luftsack 10 ist im nicht entfalteten Zustand in einem Luftsackmodul untergebracht, das ein Gehäuse 11 und einen Gasgenerator (nicht dargestellt) aufweist.

Der in Fig. 1 dargestellte Luftsack 10 weist eine im wesentlichen zylinderabschnittförmige Außenkontur auf, wobei in der lenkradseitigen Stirnfläche des Zylinders ein Luftsackmund 16 (Fig. 3) gebildet ist, durch den das von dem Gasgenerator erzeugte Gas in das Luftsackinnere einströmt.

Im Inneren des Luftsackes 10 ist im Bereich des Luftsackmundes 16 eine Umlenkeinrichtung 18 vorgesehen, die den aus dem Luftsackmund 16 austretenden Gasstrom seitlich und um mehr als 90° umlenkt. Mit anderen Worten kann das aus dem Luftsackmund 16 austretende Gas nicht direkt in Richtung der vorderen Stirnfläche des Luftsackes strömen. Vielmehr wird der Gasstrom zunächst seitlich und nach hinten abgelenkt oder umgelenkt, was durch entsprechende Pfeile angedeutet ist.

Bei dieser Ausführungsform ist die Umlenkeinrichtung 18 dadurch gebildet, daß ein Diffusorgewebeteil 20 mit einem Abstandsgewebeteil 22 vernäht ist, das den Luftsackmund 16 kreisförmig umgibt. In Draufsicht ist das Abstandsgewebeteil 22 im wesentlichen kreisförmig ausgebildet, wobei zentral in der Mitte eine kreisförmige Durchtrittsöffnung 23 für den Gasstrom gebildet ist. Das Abstandsgewebeteil 22 weist ferner über seinen Umfang verteilte laschenartige Stegabschnitte 26 auf, die dadurch gebildet sind, daß das grundsätzlich kreisförmige Abstandsgewebeteil am Außenumfang zusätzlich mit über den Umfang verteilten und an diesen angrenzenden Aussparungen 28 versehen ist. Hierbei sind die äußeren Enden der laschenartigen Stegabschnitte 26 des Abstandsgewebeteils 22 nach außen geklappt und bündig mit dem in Draufsicht kreisförmigen Diffusorgewebeteil 20 vernäht. Hierdurch wird bewirkt, daß beim Entfalten des Luftsackes der in das Luftsackinnere eintretende Gasstrom zunächst auf das Diffusorgewebeteil 20 auftrifft und anschließend durch die Aussparungen 28 seitlich austritt. Hierdurch wird die Umlenkeinrichtung beim Aufblasen etwas gewölbt, wie in den Figuren dargestellt ist, und der Außenrand des Diffusorgewebeteils 20 wölbt sich gegenüber der Ebene des Luftsackmundes konkav, wodurch der aus der Umlenkeinrichtung 18 austretende Gasstrom um mehr als 90° bzw. etwas nach hinten umgelenkt wird. Wie insbesondere Fig. 4 zeigt, weist das Abstandsgewebeteil 22 einen geschlossen umlaufenden Stegabschnitt 30 auf, an dessen Außenumfang sich die laschenartigen Stegabschnitte 26 anschließen. Der umlaufende Stegabschnitt 30 dient als aus Gewebe bestehender Abstandsring, um einen ausreichenden Abstand zwischen der Montageebene des Gasgenerators und dem Diffusorgewebeteil 20 zu gewährleisten.

Das Diffusorgewebeteil 20 ist in Draufsicht im wesentlichen kreisförmig ausgebildet, wobei das Diffusorgewebeteil 20 und das Abstandsgewebeteil 22 durch rennbahnförmige Nähte 24 so miteinander verbunden sind, daß sich die seitlichen Austrittsöffnungen 28 zwischen dem Diffusorgewebeteil 20 und dem Abstandsgewebeteil 22 öffnen können.

Wie die Fig. 1 bis 4 zeigen, wird beim Austritt des Gasstromes aus dem Gasgenerator die Richtung des Gasstromes seitlich bzw. radial abgelenkt, so daß der Gasstrom nicht in Richtung des Fahrzeuginsassen, sondern quer dazu und etwas entgegengesetzt zur ursprünglichen Einströmungsrichtung strömt. Hierdurch wird der Gassack zunächst überwiegend quer entfaltet, so daß eine Verletzung des Fahrzeuginsassen minimiert ist. Darüber hinaus hat der erfindungsgemäße Gassack besonders gute Eigenschaften in sogenannten Out-of-position-Fällen (OOP) gezeigt, in denen der Fahrzeuginsasse nicht seine übliche Position einnimmt. Wird in diesen Fällen der Gassack gezündet und die Ausbreitung des Gassackes wird durch den Fahrzeuginsassen behindert, so entfaltet sich der erfindungsgemäße Gassack in andere Richtungen, nicht jedoch in Richtung des Hindernisses, was wünschenswert ist.

### Bezugszeichenliste

- 10: Luftsack
- 12: Lenksäule
- 14: Lenkrad
- 16: Luftsackmund
- 18: Umlenkeinrichtung
- 20: Diffusorgewebeteil
- 22: Abstandsgewebeteil
- 23: Durchtrittsöffnung
- 24: Naht
- 26: laschenartiger Stegabschnitt
- 28: Aussparung
- 30: umlaufender Stegabschnitt
- 32: Armaturentafel
- 34: Stirnseite
- 36: Luftsackmund
- 40: Gewebeteil
- 42: Gewebeteil
- 46: Austrittsöffnung
- 48: Austrittsöffnung
- A: Gasstrom

## Patentansprüche

1. Luftsack, der zur Anbindung an einen Gasgenerator mit einem Luftsackmund (16) versehen ist, wobei im Inneren des Luftsackes (10) im Bereich des Luftsackmundes (16) eine Umlenkeinrichtung (18) mit einem Diffusorgewebeteil (20) vorgesehen ist, die einen durch den Luftsackmund (16) in das Innere des Luftsackes (10) eintretenden Gasstrom um mehr als 90° umlenkt,
**dadurch gekennzeichnet daß**
das Diffusorgewebeteil (20) der Umlenkeinrichtung (18) über ein Abstandsgewebeteil (22) mit dem den Luftsackmund (16) umgebenden Teil des Luftsackes (10) verbunden ist.

2. Luftsack nach Anspruch 1,
**dadurch gekennzeichnet , daß**
ein Gewebeteil (22) eine Durchtrittsöffnung (23) für einen Gasgenerator aufweist.

3. Luftsack nach Anspruch 1,
**dadurch gekennzeichnet, daß**
ein Gewebeteil (22) laschenartige Stegabschnitte (26) aufweist.

4. Luftsack nach Anspruch 1,
**dadurch gekennzeichnet, daß** beide Gewebeteile (20, 22) im wesentlichen kreisförmig sind, wobei das Abstandsgewebeteil (22) mit über dessen Umfang verteilten und an diesen angrenzenden Aussparungen (28) mit dazwischenliegenden laschenartigen Stegabschnitten (26) versehen ist.

5. Luftsack nach Anspruch 1,
**dadurch gekennzeichnet, daß**
die beiden Gewebeteile (20, 22) miteinander vernäht oder verklebt sind.

6. Luftsack nach Anspruch 1,
**dadurch gekennzeichnet , daß**
das Abstandsgewebeteil (22) einen geschlossen umlaufenden Stegabschnitt (30) aufweist, der an den Luftsackmund (16) angrenzt.

7. Luftsackmodul mit einem Gehäuse (11), einem Gasgenerator und einem Luftsack (10) nach einem der vorstehenden Ansprüche.

8. Luftsackmodul nach Anspruch 7,
**dadurch gekennzeichnet , daß**
das Abstandsgewebeteil (22) einen geschlossen umlaufenden Stegabschnitt (30) aufweist, der an den Luftsackmund (16) angrenzt, wobei die Breite des Stegabschnittes (30) mindestens der Tiefe des Gehäuses (11) entspricht.
